# EUROPEAN PATENT APPLICATION

(11) **EP 0 723 001 A1**
(43) Date of publication of application: **24.07.1996**
(21) Application number: 96300348.8
(22) Date of filing: 17.01.1996
(51) Int. Cl.: C10L 3/10

(54) **Purification of natural gas**

(30) Priority: 23.01.1995 US 376509
(71) Applicant: THE BOC GROUP, INC., Murray Hill, New Jersey 07974 (US)
(72) Inventor: Shirley, Arthur, Piscataway, New Jersey 08854 (US); Bülow, Martin, Basking Ridge, New Jersey 07920-3043 (US)
(74) Representative: Wickham, Michael

(57) **Abstract**

Hydrocarbons containing six or more carbon atoms ("natural gas liquids") and water vapour are removed from natural gas by a series of steps. In one embodiment the natural gas liquids and water vapour are removed by passing the natural gas first through a bed of aluminium-deficient zeolite, having a silicon-to-aluminium atomic ratio of greater 100:1 to remove the natural gas liquids, then through a bed of water-selective adsorbent. In another embodiment, a combination of an aluminium-deficient adsorbent and the absorption system are used to remove the natural gas liquids and water vapour from the natural gas.

## Description

This invention relates to the purification of natural gas, and more particularly to the removal of water vapour and heavy hydrocarbons from natural gas streams.

Natural gas produced from underground formations is comprised mostly of methane, but generally contains small amounts of other low molecular weight hydrocarbons and nitrogen, and usually impurity levels of water vapour and natural gas liquids (NGL), which, for purposes of this description are defined as hydrocarbons having six or more carbon atoms and which may contain significant concentrations of aromatic hydrocarbons, including one or more of benzene, toluene and the xylenes. After being removed from the ground the natural gas is generally compressed and shipped under pressure via pipeline. In some cases, it is desirable to remove carbon dioxide and/or nitrogen from the natural gas. However, it is usually necessary to remove water vapour and NGL from the natural gas to ensure that the compressed gas has a sufficiently low dewpoint to prevent condensation of these components during shipment or carbon dioxide and/or nitrogen removal.

Currently, moisture and NGL are commonly removed from natural gas by scrubbing the gas with glycol, which readily absorbs both of these components but does not appreciably absorb the lower hydrocarbon components of the natural gas. The moisture and NGL are subsequently removed from the scrubbing liquid by distillation, but since the sorbed components distill from the glycol as a gaseous mixture, the gaseous overhead stream from the distillation unit should be further treated to remove the NGL therefrom. In many cases, however, the absorbed water, together with the NGLs is exhausted to the environment as a vent, since further treatment to remove the NGLs is quite expensive. This usually entails additional costly chemical treatment steps.

More economical methods of recovering the NGL from natural gas are constantly sought. The present invention provides a more economical and less cumbersome method of separating NGL from water vapour or separately recovering water vapour and NGL from natural gas streams than currently practised procedures.

According to a first aspect of the present invention there is provided an adsorption method for removing hydrocarbons having six or more carbon atoms from a natural gas feed stream, comprising passing said feed stream through an adsorbent able selectively to adsorb hydrocarbons having six or more carbon atoms from the feed stream, wherein the hydrocarbon selective adsorbent has a silicon to aluminium atomic ratio greater than 100:1.

According to a second aspect of the present invention there is provided a method of removing water vapour and hydrocarbons having six or more carbon atoms from a natural gas feed stream, comprising contacting said feed stream with a bed of adsorbent able selectively to adsorb hydrocarbons having six or more carbon atoms from a natural gas stream, thereby producing a natural gas stream depleted of hydrocarbons having six or more carbon atoms, and subjecting the depleted gas stream to a dehydration by contacting the depleted gas stream with a feed of water-vapour selective adsorbent or with a water selective absorbent, thereby producing a natural gas stream depleted of both water vapour and hydrocarbons having six or more carbon atoms, wherein the hydrocarbon-selective adsorbent has a silicon to aluminium atomic ratio greater than 100:1.

According to a third aspect of the present invention there is provided a method of removing water vapour and hydrocarbons having six or more carbon atoms from a natural gas feed stream, comprising:
a) contacting said feed stream with an absorbent able selectively to absorb water vapour and hydrocarbons having six or more carbon atoms from the natural gas feed stream and thereby producing (i) a natural gas stream depleted of water vapour and hydrocarbons having six or more carbon atoms and (ii) an absorbent stream enriched in water vapour and hydrocarbons having six or more carbon atoms;
b) stripping or distilling a gas mixture containing water vapour and hydrocarbons having six or more carbon atoms from the absorbent stream;
c) contacting said gas mixture with a bed of adsorbent able selectively to adsorb hydrocarbons having six or more carbon atoms from the gas mixture, thereby producing a non-adsorbed water vapour stream and adsorbed hydrocarbons having six or more carbon atoms; and
d) desorbing the hydrocarbons having six or more carbon atoms from the hydrocarbon-selective adsorbent;
wherein the hydrocarbon selective adsorbent has a silicon-to-aluminium atomic ratio greater than 100:1.

The methods according to the present invention will now be described by way of example with reference to the accompanying drawings, in which:
Figure 1 is a schematic representation of a preferred embodiment of the invention;
Figure 2 is a schematic representation of an alternative embodiment of the invention; and
Figure 3 is a schematic representation of a variation of the embodiment illustrated in Figure 2.

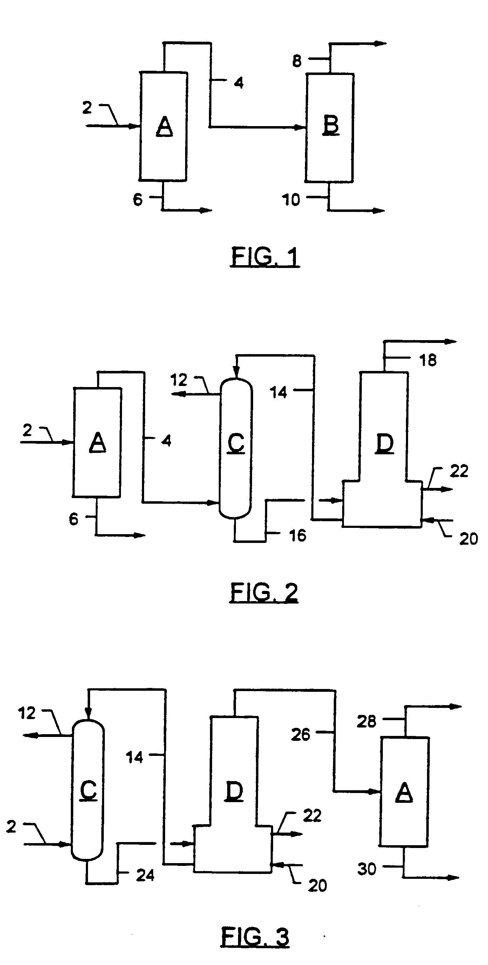

The embodiments of Figures 1 to 3 of the accompanying drawing illustrate systems for removing both NGL and water vapour from natural gas. Each system includes an adsorption plant containing an adsorbent which more strongly adsorbs NGL than the other components of a natural gas feed stream. The system shown in Figure 1 additionally includes an adsorption plant containing an adsorbent which preferentially adsorbs water vapour relative to natural gas, while the embodiments of Figures 2 and 3 use a water absorption system in combination with the NGL selective adsorption plant to remove NGL and water vapour from natural gas.

Auxiliary equipment not necessary for an understanding of the invention, including compressors, heat exchangers and valves, has been omitted from the drawing to simplify discussion of the invention. The same or reference numerals have been used to represent the same or similar parts in the various figures.

Figure 1 illustrates a preferred embodiment of the invention. The system of Figure 1 comprises two separators, separator A and separator B. The function of separator A is to separate NGL from the other components of the natural gas feed, and separator B serves the purpose of separating water vapour from the natural gas. Separators A and B are gas adsorption plants, typically pressure swing adsorption (PSA) or temperature swing adsorption (TSA) systems. The adsorption processes in separators A and B can be carried out either in a single series of adsorbent beds in which the NGL-adsorbing bed is positioned upstream of the water vapour-adsorbing bed, or in batteries of two or more parallel sets of adsorption beds arranged in series, the parallel arranged beds preferably being operated out of phase, so that at least one bed is undergoing adsorption while the adsorbent in another bed is being replaced or regenerated. Preferably, the system of this embodiment comprises two or more series of stationary adsorbent beds arranged in parallel and adapted to be operated out of phase in a cyclic process comprising adsorption and desorption to assure a pseudo-continuous flow of purified natural gas through the entire system.

Separator A is provided with feed line 2, nonadsorbed gas discharge line 4, and desorbed gas discharge line 6. Line 4 connects the nonadsorbed gas outlet of separator A to the inlet of separator B. Separator B is additionally provided with natural gas product line 8 and water vapour discharge line 10.

The beds of separator A are packed with an adsorbent which selectively adsorbs NGL from a gas mixture containing natural gas, NGL and water vapour. In general, the adsorbents used in separator A are substantially metal cation-free and alumina-deficient, i.e. their lattice structures are depleted of, and preferably substantially free of, alumina groups. Specifically, they have silicon to aluminium atomic ratios of at least 100. Included in this group of adsorbents are molecular sieves of the FAU, MFI and MEL type structures, including zeolites that have been made alumina-deficient by dealumination and molecular sieves that are directly synthesised without introducing alumina groups into the lattice structure. Alumina-deficient molecular sieves useful in the invention include dealuminated type Y zeolite (DAY), as well as ZSM-5, ZSM-11 and ZSM-20 and BETA type zeolites, all having silicon to aluminium atomic ratios of at least about 100. Other synthesised molecular sieves that are substantially free of alumina groups which are useful in the invention include those having structures analogous to ZSM-5 and ZSM-11, known as silicalite-1 and silicalite-2, respectively. each of which are substantially free of alumina groups in their structures. Preferred molecular sieves are DAY, alumina-deficient ZSM-5 and silicalite-1, all of which are substantially metal cation-free and all of which are commercially available. For purposes of this invention the term "metal cation-free" means that the adsorbent contains no more than trace amounts of metal cations, and the terms "alumina-deficient" and "dealuminated", when used in reference to molecular sieves mean that the ratio of silicon to aluminium atoms in the sieves is at least about 100:1, i.e., the ratio of silica to alumina groups in the sieve is at least 200:1.

Alumina-deficient molecular sieves can be prepared, for example, by steaming or acid treatment of appropriate zeolites of the desired structure, or by treating the zeolite with silicon tetrachloride and ammonium fluorosilicate, any of which procedures results in the manufacture of a molecular sieve having a crystalline structure comprised substantially of tetrahedral silicon dioxide units. The particular method of dealumination of the adsorbents intended for use in separator A is not critical, and methods of effecting the desired result are well known and form no part of the present invention.

The metal cation content of the molecular sieves from which the separator A adsorbents are made can also be decreased by replacing the metal cations with hydrogen ions, i.e. protons.

This can be accomplished, for example, by replacing metal cations with ammonium ions and subsequently driving ammonia from the exchanged adsorbent, thereby leaving protons in place of the metal cations. Such procedures are likewise well known and form no part of the present invention. If desired, the metal cation content of the precursor molecular sieves can be reduced by a combination of the above two procedures, that is, by increasing the silica-to-alumina ratio in the adsorbent and by replacing some or all of the remaining metal cations with protons.

The beds of separator B are packed with one or more adsorbents which selectively adsorb water vapour from an NGL-depleted natural gas stream containing water vapour. In general, the adsorbents used in separator B may be alumina, silica or a zeolite which preferentially adsorbs water vapour from natural gas. Preferred separator B adsorbents are alumina, silica gel and zeolite 3A. These adsorbents are all well known, and their structures and methods of manufacture form no part of this invention.

According to the process carried out in the system of Figure 1, a natural gas feed stream which contains as impurities NGL and water vapour enters separator A through line 2. As the feed gas passes through separator A, the NGL is adsorbed by the adsorbent contained therein, while the other components pass through the adsorbent and exit adsorber A through nonadsorbed product line 4. The nonadsorbed gas stream from separator A next enters separator B. As it passes through the beds of separator B, water vapour is adsorbed by the adsorbent contained therein, and NGL- and water vapour-depleted natural gas passes through the adsorbent and exits the system through line 8.

The adsorption steps in separators A and B are generally carried out at temperatures in the range of about 0°C to about 100°C, and they are preferably carried out in the range of about 20 to about 60°C. The pressures at which the adsorption steps are carried out generally range from about 0.2 to about 20 bar and preferably range from about 1 to 10 bar for pressure swing adsorption cycles; and they are usually about atmospheric or above for temperature swing adsorption cycles.

When the adsorption processes are PSA, the regeneration step is generally carried out temperatures near or at the temperature at which the adsorption step is carried out and at absolute pressures lower than the adsorption step pressures. The pressure during the regeneration step of PSA cycles is usually in the range of about 20 to about 5000 millibar, and is preferably in the range of about 100 to about 2000 millibar. When the adsorption processes are TSA, bed regeneration is carried out at a temperatures higher than the adsorption temperatures, for example at temperatures in the range of about 50 to about 250°C, and it is preferably carried out at temperatures in the range of about 100 to 200°C. In the TSA embodiment, the pressure is generally approximately the same during the adsorption and regeneration steps, and it is often preferred to conduct both steps at about atmospheric pressure or above. When a combination of PSA and TSA is used the bed temperatures and pressures during the regeneration step are higher and lower, respectively, than they are during the adsorption step.

The adsorption processes carried out in separators A and B may both be PSA or TSA, or one may be PSA and the other TSA. In a preferred embodiment of the invention, the adsorption processes in separators A and B are both TSA.

During the course of the adsorption steps, the adsorbed NGL forms an adsorption front in separator A and the adsorbed water vapour forms an adsorption front in separator B. The fronts in each vessel steadily move toward the nonadsorbed gas outlet ends of the vessel. When the adsorbed gas fronts travelling through the vessels of each separator reach the desired end point in the vessels, the adsorption processes in these vessels are terminated and the vessels enter the regeneration mode. The adsorption processes in separators A and B may be operated independently of each other, e.g. by directing the nonadsorbed gas from the separator A vessel(s) to a manifold adapted to direct this gas stream to any desired adsorption vessel of separator B, or they may be operated in unison, in which case the termination of the adsorption steps will be determined by the relative rates of advance of the adsorption fronts in separators A and B, which, in turn, depends upon the relative sizes of the separator A and B adsorption vessels and the composition of the feed gas.

During bed regeneration, the NGL-loaded and water vapour-loaded vessels are depressurized, if the adsorption cycle is pressure swing adsorption, or heated, if a temperature swing adsorption cycle is employed. The steps involved in bed regeneration depend upon the particular adsorption processes employed. In the case of pressure swing adsorption, the regeneration phase generally includes a countercurrent depressurization step during which the beds are vented countercurrently until they attain the desired lower pressure. If desired the pressure in the beds may be reduced to subatmospheric pressure by means of a vacuum inducing device, such as a vacuum pump (not shown).

In some cases, in addition to the countercurrent depressurization steps, it may be desirable to countercurrently purge the beds with nonadsorbed product gas stream exiting the adsorbent beds. In this case the bed(s) of separator A may be countercurrently purged with nonadsorbed gas from separator A or from separator B, and the bed(s) of separator B are generally purged with nonadsorbed gas from separator B. The purge step is usually initiated towards the end of the countercurrent depressurization step, or subsequent thereto. During the purge steps, the purge gas can be introduced into the adsorbent bed from intermediate storage facilities, when the adsorption system comprises a single train of adsorbers; or from another adsorber that is in the adsorption phase, when the adsorption systems comprise multiple adsorbers arranged in parallel and operated out of phase. The purge gas-purged gas mixtures from each separator system may be recycled to the inlet end of separator A, or they may be recycled to the inlet ends of their respective separators, to recover natural gas from the purge stream.

The adsorption cycles may contain steps other than the fundamental steps of adsorption and regeneration. For example, it may be advantageous to depressurize the adsorption beds in multiple steps, with the first depressurization product being used to partially pressurise another bed in each adsorption system. This will further reduce the amount of gaseous impurities in the natural gas product.

The system of Figure 2 comprises separator A, absorption column C and absorbent stripping column D. Separator A of Figure 2 functions in the same manner as the separator A plant of the system of Figure 1. Absorption column C is a typical absorption unit suitable for the absorption of water vapour from a gaseous feed stream, wherein the feed gas is generally introduced into the bottom section of the column and passes upwardly through the column, while a water-absorbing liquid, generally introduced into the top of the column, passes downwardly through the column. The absorbent contacts the gas in countercurrent flow and removes water vapour from the gas. Column D is a typical stripping unit in which a water-loaded liquid absorbent is heated to drive absorbed water from the absorbent.

The absorbent used in the system of Figure 2 can be any absorbent which absorbs water vapour from a hydrocarbon-containing gas stream without imparting impurities to the gas. Preferred absorbents are the glycols, and the most preferred absorbents are ethylene glycol, di(ethylene glycol), tri(ethylene glycol), propylene glycol, di(propylene glycol) and mixtures of these.

Nonadsorbed gas discharge line 4 is connected to the inlet of water vapour absorption column C. Unit C is also provided with purified natural gas product line 12, regenerated absorbent feed line 14 and spent absorbent discharge line 16. Line 16 is connected to the feed inlet of stripping column D and line 14 is connected to the stripped solvent outlet of column D. Water vapour discharge line 18 is connected to the top of stripping column D, and the reboiler section of column D is provided with heating fluid supply and return lines 20 and 22, respectively.

In practising the process of the invention in the system of Figure 2, natural gas containing NGL and water vapour enters separator A through line 2, which performs in the identical manner as separator A of Figure 1. The NGL-depleted nonadsorbed gas leaving separator A next enters column C and flows upwardly through this column. During the passage of the gas through column C, water vapour is absorbed from the gas by the absorbent entering the column through line 14 and descending through the column. The dried natural gas product leaves column C through line 12 and passes to storage or end use. The water-rich absorbent leaves column C through line 16 and is returned to stripping column D. The absorbent is heated in stripper D by hot liquid or gas which enters and exits the reboiler section of column D through lines 20 and 22, respectively, or by any other suitable heating means. Water vapour stripped from the absorbent rises to the top of column D and is removed therefrom through line 18, while regenerated absorbent is recycled to column for reuse.

The system of Figure 3 includes the same units as that of Figure 2, except that separator A is located downstream of stripping column D. Natural gas feed line 2 is connected to the feed inlet of absorption column C, purified natural gas product line 12 is connected to the lean gas outlet of column C and fresh and spent absorbent lines 14 and 24 are respectively connected to the absorbent inlet and outlet of column C. Line 26 connects the stripped gas outlet of stripping column D to the feed inlet of NGL adsorption plant A. Water vapour waste discharge line 28 and NGL product gas line 30 are connected to the nonadsorbed gas outlet and the desorbed gas outlet, respectively, of plant A.

In the operation of the system of Figure 3, natural gas containing NGL and water vapour enter column C through line 2 and passes upwardly through the column. As the gas rises in column C it contacts fresh descending absorbent, whereupon NGL and water vapour is removed from the gas. The dry purified natural gas exits column C through line 12. Meanwhile, the NGL-rich and water vapour-rich absorbent exits column C through line 24 and enters stripping column D, wherein the NGL and water vapour are stripped from the absorbent. The stripped gases rise in column D and exit through line 26 and regenerated absorbent leaves column D through line 14 and is returned to column C for reuse. The stripped gas mixture next enters separator A, wherein the NGL is adsorbed while the nonadsorbed water vapour passes out of this plant through line 28 and is disposed of. The NGL is desorbed from the adsorbent in the manner described above and removed to storage through line 30.

It will be appreciated that it is within the scope of the present invention to utilise conventional equipment to monitor and automatically regulate the flow of gases within the system so that it can be fully automated to run continuously in an efficient manner.

The invention is further illustrated by the following example in which, unless otherwise indicated, parts, percentages and ratios are on a volume basis.

### EXAMPLE

Adsorption isotherms for toluene (as a representative component of NGL) in helium and water vapour in helium were determined from measurements made using a differential adsorption bed system under dynamic conditions. The determinations were made at 25°C and at a total pressure of 760 torr using dealuminated type Y zeolite having a silicon-to aluminium atomic ratio of about 110 (sold by DEGAUSS of Germany under the trade designation Wessalith). The partial pressure, stated in torr, and the concentration of the sorbed component, stated in mmol per gram, for each run are reported in the Table.

**TABLE**

| Run | Partial Pressure, torr | | Conc., mmol/g | |
|---|---|---|---|---|
| | Water | Toluene | Water | Toluene |
| 1 | --- | 0.007 | --- | 0.763 |
| 2 | --- | 0.011 | --- | 1.446 |
| 3 | --- | 0.191 | --- | 1.620 |
| 4 | 0.215 | --- | not det. | --- |
| 5 | --- | 0.259 | --- | 1.641 |
| 6 | --- | 0.559 | --- | 1.761 |
| 7 | --- | 0.944 | --- | 1.837 |
| 8 | 1.731 | --- | 0.011 | -- |
| 9 | --- | 1.912 | --- | 1.935 |
| 10 | --- | 2.813 | --- | 1.957 |
| 11 | 3.120 | --- | 0.371 | --- |
| 12 | --- | 3.997 | --- | 1.989 |
| 13 | 5.911 | --- | 0.606 | --- |
| 14 | 9.770 | --- | 0.994 | --- |
| 15 | 11.73 | --- | 1.117 | --- |
| 16 | 13.34 | --- | 1.433 | --- |
| 17 | 14.57 | --- | 1.586 | --- |

Separation factors calculated from the data reported in the Table varied from 700 to 10 in favour of toluene. For runs 1 to 4, in which no sorbed amounts of water could be detected, the separation factor, due to its definition, approaches infinity. The separation factors decreased as the partial pressure increased. The above example illustrates that toluene is easily separated from water vapour by adsorption using dealuminated type Y zeolite.

Although the invention has been described with particular reference to specific embodiments, these are merely exemplary of the invention and variations are contemplated. For example, although Figure 1 illustrates a system comprising an NGL adsorption unit followed by a water adsorption unit, the system can be reversed, so that the water adsorption unit precedes the NGL adsorption unit, as is described above. Similarly, the processes practised in the systems illustrated in Figures 2 and 3 may be carried out using stripping equipment other than that illustrated in these figures. The broadest embodiment of the invention, in which only NGL are removed from the natural gas stream, is not illustrated in the drawing figures since it involves a single adsorption system. The scope of the invention is limited only by the breadth of the appended claims.

## Claims

1. An adsorption method for removing hydrocarbons having six or more carbon atoms from a natural gas feed stream, comprising passing said feed stream through an adsorbent able selectively to adsorb hydrocarbons having six or more carbon atoms from the feed stream, wherein the hydrocarbon selective adsorbent has a silicon to aluminium atomic ratio greater than 100:1.

2. A method of removing water vapour and hydrocarbons having six or more carbon atoms from a natural gas feed stream, comprising contacting said feed stream with a bed of adsorbent able selectively to adsorb hydrocarbons having six or more carbon atoms from a natural gas stream, thereby producing a natural gas stream depleted of hydrocarbons having six or more carbon atoms, and subjecting the depleted gas stream to a dehydration by contacting the depleted gas stream with a feed of water-vapour selective adsorbent or with a water selective absorbent, thereby producing a natural gas stream depleted of both water vapour and hydrocarbons having six or more carbon atoms, wherein the hydrocarbon-selective adsorbent has a silicon to aluminium atomic ratio greater than 100:1.

3. A method of removing water vapour and hydrocarbons having six or more carbon atoms from a natural gas feed stream, comprising:
a) contacting said feed stream with an absorbent able selectively to absorb water vapour and hydrocarbons having six or more carbon atoms from the natural gas feed stream and thereby producing (i) a natural gas stream depleted of water vapour and hydrocarbons having six or more carbon atoms and (ii) an absorbent stream enriched in water vapour and hydrocarbons having six or more carbon atoms;
b) stripping or distilling a gas mixture containing water vapour and hydrocarbons having six or more carbon atoms from the absorbent stream;
c) contacting said gas mixture with a bed of adsorbent able selectively to adsorb hydrocarbons having six or more carbon atoms from the gas mixture, thereby producing a non-adsorbed water vapour stream and adsorbed hydrocarbons having six or more carbon atoms; and
d) desorbing the hydrocarbons having six or more carbon atoms from the hydrocarbon-selective adsorbent;
wherein the hydrocarbon selective adsorbent has a silicon-to-aluminium atomic ratio greater than 100:1.

4. A method as claimed in claim 1, further comprising removing water vapour from said feed stream upstream of the passage of said feed stream through the hydrocarbon-selective adsorbent.

5. A method as claimed in claim 2, wherein the dehydration step comprises contacting the hydrocarbon-depleted gas stream with a bed of adsorbent selected from alumina, silica gel, zeolite 3A and mixtures of these.

6. A method as claimed in claim 2, wherein the dehydration step comprises contacting the hydrocarbon-depleted gas stream with a glycol.

7. A method as claimed in claim 3, wherein said absorbent comprises a glycol.

8. A method as claimed in claim 6 or claim 7, wherein the glycol is selected from ethylene glycol, di(ethylene glycol), tri(ethylene glycol), propylene glycol, di(propylene glycol), and mixtures of these.

9. A method as claimed in any one of the preceding claims, wherein the hydrocarbon-selective adsorbent has an FAU, MFI or MEL type structure.

10. A method as claimed in any one of the preceding claims, wherein the hydrocarbon-selective adsorbent is selected from type Y zeolite, type ZSM-5 zeolite, type ZSM-11 zeolite, type ZSM-20 zeolite, silicalite-1, silicalite-2, type BETA zeolite and mixtures of these.

11. A method as claimed in claim 10, in which the hydrocarbon-selective adsorbent is essentially free of metal cations.
